# EUROPÄISCHE PATENTSCHRIFT

(11) **EP 3 318 840 B1**
(45) Veröffentlichungstag und Bekanntmachung des Hinweises auf die Patenterteilung: **27.02.2019**
(21) Anmeldenummer: 16197219.5
(22) Anmeldetag: 04.11.2016
(51) Int. Cl.: G01B 21/04, G01C 9/12, G01C 9/16, G01D 5/347, G01D 5/54, G01D 5/244

(54) **TEILUNGSMESSEINRICHTUNG UND VERFAHREN ZUR ÜBERPRÜFUNG DER POSITIONIERGENAUIGKEIT EINES EINE BEWEGUNGSBAHN AUSFÜHRENDEN MASCHINENTEILS**
PARTITION MEASUREMENT DEVICE AND METHOD FOR VERIFYING THE POSITION ACCURACY OF A TRAJECTORY EXECUTING MACHINE PART
DISPOSITIF DE MESURE DE SÉPARATION ET PROCÉDÉ DE CONTRÔLE DE L'EXACTITUDE DE POSITION D'UNE PARTIE DE MACHINE EXÉCUTANT UNE TRAJECTOIRE

(43) Veröffentlichungstag der Anmeldung: 09.05.2018
(73) Patentinhaber: DREIER Technology GmbH, 72160 Horb-Bittelbronn (DE)
(72) Erfinder: Dreier, Horst E., 72160 Horb-Bittelbronn (DE)
(74) Vertreter: Klocke, Peter

(56) Entgegenhaltungen:
- EP-A1- 1 826 642
- EP-A1- 2 312 270
- EP-A1- 3 108 996
- WO-A1-2014/108187
- DE-A1- 4 110 741
- JP-A- H01 221 631

## Beschreibung

Die Erfindung betrifft eine Teilungsmesseinrichtung zur Überprüfung der Positioniergenauigkeit eines mindestens eine zweidimensionalen Bewegungsbahn ausführenden Maschinenteils, mit einem Gehäuse mit Befestigungsmittel zum Festlegen an dem Maschinenteil und einer integrierten Messvorrichtung, die in dem Gehäuse angeordnet ist und eine zentrisch angeordnete Drehwelle und einen Drehgeber zur Erfassung der Winkelposition des Drehgebers gegenüber der Drehwelle enthält, sowie ein Verfahren zur Überprüfung der Positioniergenauigkeit mit einer derartigen Teilungsmesseinrichtung.

Die heutigen hohen Anforderungen an die Genauigkeiten von Bearbeitungsmaschinen, beispielsweise von NC-gesteuerten Werkzeugmaschinen, machen es erforderlich, dass neben den Linearachsen auch die Rotationsachsen, wie z. B. die A-, B- und C- Achse von NC-gesteuerten Werkzeugmaschinen, bestmöglich vermessen und optimiert werden müssen. Dies ist speziell auch dadurch erforderlich geworden, da bei der heutigen 5-Achs-Fertigung die Rotationsachsen einen großen Einfluss auf die Fertigungsgenauigkeit haben. Aus diesem Grund wird häufig als Abnahmeteil für eine derartige Maschine nicht mehr nur ein zylindrisches sondern ein kegelförmiges Prüfteil angefertigt. Dabei wird gefordert, dass der am Werkstück gemessene Rundheitsfehler unter 10 µm beträgt.

Derartige hohe Genauigkeiten bedeuten, dass die Positioniergenauigkeit der Linear- wie auch Rotationsachsen optimal auf einander abgestimmt sein müssen. Aus diesem Grund ist es wichtig, dass bei einer Maschinenabnahme neben den Linearachsen auch noch die Rotationsachsen vermessen und ggf. die Maschinensteuerung entsprechend korrigiert wird. Die erforderlichen Genauigkeiten werden nur erreicht, wenn die Linearachsen mit einer Lasermessvorrichtung und die Dreh- und Schwenkachsen mit einer hochgenauen Teilungsmesseinrichtung, mit einer Systemgenauigkeit von max. ± 1 arcsec., vermessen und optimiert werden, die durch 30.000 Messpunkte pro 360 Grad des Drehgebers erreicht wird.

Allgemein ist auch bekannt, dass sich derartige Maschinen und deren Fundamente durch Gewichtsverlagerung mehr oder weniger nach Hinten, nach Vorne oder zur Seite neigen. Bearbeitungsungenauigkeiten treten dabei in der Regel nur dann auf, wenn sich die Maschine dadurch im Ganzen neigt. Um die Neigung der Maschine feststellen zu können, wird diese üblicherweise mittels einer Teilungsmesseinrichtung vermessen.

Teilungsmesseinrichtungen der eingangs beschrieben Art sind aus dem Stand der Technik bekannt. Beispielhaft wird auf die von der Anmelderin unter der Bezeichnung TGM 8088 gebaute und vertriebene Teilungsmesseinrichtung, als Stand der Technik, verwiesen. Bei dieser bekannten hochgenauen Teilungsmesseinrichtung ist ein Gehäuse vorgesehen, das eine Adapterplatte aufweist, mit der das Gehäuse für jede beliebige Anwendung fest mit dem rotierenden Teil beispielsweise einer NC-gesteuerten Werkzeugmaschine, wie beispielsweise Maschinentisch, Werkzeugspindel, Maschinenarm, verbunden werden. Das Gehäuse der Teilungsmesseinrichtung führt somit die Bewegungen des beweglichen Maschinenteils aus. In dem Gehäuse befindet sich eine Messvorrichtung, die eine zentrisch angeordnete Drehwelle und einen Drehgeber aufweist. Drehgeber sind Sensoren für eine Drehwinkelerfassung, die meist digitale Ausgangssignale liefern, die am anderen Ende der Sensorleitung im Auswertegerät decodiert werden müssen. In diesem Fall wird er auch als Encoder (rotary encoder) bezeichnet. Grundsätzlich können die Ausgangssignale digital oder analoge Sinus- oder Cosinussignale sein. Die Drehwelle ragt aus der Gehäuseoberseite heraus und wird bei der Messung mit einem Abtastgestänge an einem feststehenden Maschinenteil als Referenz fixiert. Bei der Messung verdreht sich das Gehäuse gegenüber der feststehenden Drehwelle, sodass damit die Bewegung des beweglichen Maschinenteils erfasst werden kann. Für die Messung werden über die Maschinensteuerung eine Vielzahl von Winkelstellungen angefahren und vermessen. Mit der Teilungsmesseinrichtung werden die tatsächlichen Winkelstellungen (Ist-Position) erfasst und die Abweichung gegenüber der Vorgabe in der Maschinensteuerung (Soll-Position) ermittelt. Diese Differenzen werden nach Beendigung der Messung in die Maschinensteuerung eingegeben und damit die Positionsabweichungen ausgeglichen, so das ein hochgenaues Bearbeiten von Werkstücken entsprechend der korrigierten Maschinensteuerung möglich ist.

Die Patentanmeldung EP 1 826 642 A1 offenbart eine Vorrichtung zur Überprüfung der Genauigkeit der Bewegung einer Arbeitsspindel einer NC gesteuerten Werkzeugmaschine entlang einer Kreisbahn. Diese Vorrichtung weist ein Gehäuse mit einem auf einem Maschinentisch festspannbaren Gehäusefußteil und einem am Gehäusefußteil drehbar gelagerten Gehäusekopfteil auf, dessen Drehwinkel mit einem Drehgeber messbar ist. Am Gehäusekopfteil ist ein Meßarm schräg oder quer zu einer Drehachse des Gehäusekopfteils angeordnet, an dessen Ende ein Einspannglied gelagert ist, das zur Überprüfung der Genauigkeit der Bewegung einer Arbeitsspindel anstelle eines Werkzeugs in eine Spannzange der Arbeitsspindel eingespannt wird.

Die Patentanmeldung EP 2 312 270 A1 offenbart ebenfalls eine Vorrichtung zur Überprüfung der Genauigkeit der Bewegung einer Arbeitsspindel einer NC gesteuerten Werkzeugmaschine entlang einer Kreisbahn, die vergleichbar der zuvor erläuterten Vorrichtung ausgebildet ist. Ihr Meßarm ist teleskopierbar und weist eine Längenmesseinrichtung mit einem Glasmaßstab auf.

Die Patentanmeldung EP 3 108 996 A1, eingereicht am 23.06.2015 und veröffentlicht am 28.12.2016, offenbart eine Vorrichtung zur Messung thermisch bedingter Verlagerungen einer schnell rotierenden Spindel.

Der Erfindung liegt die Aufgabe zugrunde, die bekannte Teilungsmesseinrichtung hinsichtlich des Aufbaus zu verbessern, so dass zusätzlich zu den bisherigen Messungen weitere Einflüsse auf die Messung berücksichtigt und die Messungen genauer durchgeführt werden können.

Diese Aufgabe wird erfindungsgemäß durch eine Teilungsmesseinrichtung mit den Merkmalen des unabhängigen Patentanspruchs 1 sowie des nebengeordneten Verfahrensanspruchs gelöst. Weitere vorteilhafte Ausführungsformen sind den jeweiligen rückbezogen Patentansprüchen zu entnehmen.

Danach weist die erfindungsgemäße Teilungsmesseinrichtung zur Überprüfung der Positioniergenauigkeit ein Gehäuse mit einem Gehäusefußteil und einem gegenüber diesem drehbar über die zentrisch angeordnete und an dem Gehäusefußteil drehfest angeordnete Drehwelle verbundenes Gehäusekopfteil auf, wobei in dem Gehäusekopfteil der Drehgeber und die elektronische Schaltungseinheit angeordnet sind, und das Gehäusefußteil die Befestigungsmittel aufweist. Damit ist das Gehäusekopfteil das feststehende Teil, an dem das Abtastgestänge befestigt wird, wobei das Gehäusekopfteil vorteilhafterweise größer als das Gehäusefußteil ausgebildet ist. Das Gehäusefußteil dreht sich mit dem beweglichen Maschinenteil, so dass die Drehwinkel der an dem Gehäusefußteil befestigten Drehwelle gegenüber dem Gehäusekopfteil erfasst und angezeigt und/oder direkt mit entsprechender Software in die Maschinensteuerung eingegeben werden kann. Vorzugsweise wird ein Drehgeber mit Eigenlagerung verwendet.

Die erfindungsgemäße Teilungsmesseinrichtung weist einen ersten Neigungssensor auf, der vorzugsweise in einem Pendelelement integriert ist, das an dem Einspannzapfen befestigbar oder abnehmbar befestigt ist. Der erste Neigungssensor wird für die Vermessung von horizontalen Rotationsachsen benötigt. Die Aufgabe des Pendelelements mit dem ersten Neigungssensor besteht darin, das obere Gehäuseteil in der senkrechten Ausgangsposition zu halten, d. h. bei einer Drehung der Rotationsachse das obere Gehäuseteil in die Ausgangsstellung zurück zu drehen Das Pendelelement ist vorzugsweise stabförmig länglich, insbesondere mit einer rechteckigen Querschnittsform ausgeführt und steht, am Gehäusekopfteil befestigt, in radialer Richtung des Kopfteils über den Außenumfang der Messvorrichtung vor. Bei den Messungen mit dem Pendelelement muss die Teilungsmesseinrichtung nicht hundertprozentig mittig zur Rotationsachse ausgerichtet werden. Aufgrund des Reibwiderstandes besteht die Möglichkeit, dass das Pendelelement nicht genau senkrecht ausgerichtet ist. Dafür wird der Neigungssensor in dem Pendelelement benötigt. Dieser zeigt die Abweichungen des Pendelelements bzw. des Gehäuseoberteils an. Die dabei ermittelten Abweichungen werden bei der Messung korrigiert

Die Teilungsmesseinrichtung weist neben dem ersten Neigungssensor zusätzlich einen zweiten Neigungssensor auf, der fern von der Messvorrichtung an der Maschine angebracht werden muss, beispielsweise an einem Rahmen oder Maschinenständer usw. der Maschine. Vor der Messung werden alle Messwerte des Drehgebers sowie der beiden Neigungssensoren in dem Computer auf 0 gesetzt. Verändert sich die Lage der ganzen Maschine, so ändern sich die Messwerte des Drehgebers und der beiden Neigungssensoren. Diese Veränderungen werden miteinander verrechnet, so dass das keinen Einfluss auf die Messung hat. Das gleiche geschieht bei einer Verwindung des Rahmens der Maschine. Der zweite Neigungssensor ist in einem Gehäuseelement integriert. Bevorzugt wird als zweiter Neigungssensor ein zweites Pendelelement mit integriertem Neigungssensor verwendet, das entsprechend dem für das Gehäusekopfteil ausgebildet ist. Ohne ein zweites Pendelelement kommt es zu erheblichen Messfehlern. Vorzugsweise kann auch eine Öldämpfung in den Pendelelementen vorgesehen sein, um unerwünschte Eigenbewegungen des Pendelelements aufgrund von Erschütterungen in der Maschine zu vermeiden.

In einer Ausführungsform der Erfindung weist dabei das Gehäusekopfteil und/oder das Gehäusefußteil günstigerweise eine im Wesentlichen zylindrische Form auf. Das Gehäusekopfteil kann mit oder ohne Pendelelement, d.h. mit oder ohne Neigungssensor benutzt werden. Um den in dem Pendelelement aufgenommenen Neigungssensor verwenden zu können, muss das längliche Pendelelement sich nach der Befestigung der Messvorrichtung an der Maschine vertikal erstrecken, also das Gehäusefußteil derart angeordnet sein, dass die Drehwelle horizontal verläuft. Bei der Verwendung der Messvorrichtung ohne Pendelelement, ist die Ausrichtung des Gehäusefußteils beliebig, d.h. die Drehwelle kann sich in jeder Lage des Raumes bei der Montage erstrecken, was mit lasergestützten oder mit einer Nivelliereinrichtung ausgerüsteten Teilungsmesseinrichtungen nicht möglich ist.

An dem Gehäusekopfteil sind je ein Einzelsteckverbinder als Datenausgang für den Drehgeber und je ein Einzelsteckverbinder als Dateneingang für den am Gehäusekopfteil angebrachten Neigungssensor angeordnet. Da das Gehäusekopfteil feststeht, ist eine Verwicklung der Zuleitungen ausgeschlossen, sodass beliebig viele Drehungen ausgeführt werden können.

Vorzugsweise weist das Gehäusekopfteil einen mit der Achse der Drehwelle fluchtend angeordneten Einspannzapfen auf. Dieser Einspannzapfen dient, wie beim Stand der Technik, der Anbringung des Abtastgestänges, das über ein Klemmstück an dem Einspannzapfen und am anderen Ende an einem nicht beweglichen Teil der Maschine fixiert wird. Damit wird auch das Gehäusekopfteil bei der Messung festgehalten, so dass es keine Drehung ausführt. Die Anbringung des Abtastgestänges möglichst genau in der Achse der Drehwelle ist ebenfalls wichtig, um Messfehler zu vermeiden.

Gemäß einer vorteilhaften Ausführung der Erfindung weist das Gehäusekopfteil einen Gehäusedeckel und einen Gehäusemantel auf. Dieser Aufbau ermöglicht eine kompakte und gegenüber dem Stand der Technik auch im Umfang und Durchmesser kleinere Ausgestaltung der Teilungsmesseinrichtung. Der Gehäusedeckel erlaubt einerseits den leichten Zugang zu Elementen innerhalb des Gehäuses und des Weiteren die Anbringung von Anschlussmittel in Form von Steckverbindern sowie auf der Rückseite des Gehäusedeckels Schaltungsplatinen und Anschlussverbindungen zu den Anschlussmitteln und der Messvorrichtung. Vorzugsweise weist das Gehäusekopfteil elektrische Anschlussmittel für verschiedene Betriebsarten auf, wobei die elektrischen Anschlussmittel zweckmäßigerweise als Steckverbinder ausgeführt sind. Diese können beispielsweise Anschlussbuchsen für entsprechende Stecker mit unterschiedlichen Polzahlen sein.

Bevorzugt wird eine Ausführungsform der erfindungsgemäßen Teilungsmesseinrichtung, bei der das Gehäusefußteil einen Fuß mit einer Druckplatte und mit einer Stellplatte aufweist, wobei die Stellplatte zur Befestigung an dem Maschinenteil vorgesehen ist. Die Druckplatte klemmt einen am fußseitigen Ende der Drehwelle befindlichen Drehwellenfuß mit der Stellplatte. Zwischen der Stellplatte und der Druckplatte sind Ausrichtmittel angeordnet, die das Zentrieren der Drehwelle und damit auch des Gehäusekopfteils ermöglichen. Damit kann eine genaue Positionierung des Gehäuses zu dem beweglichen Maschinenteil realisiert werden. Wie bereits ausgeführt, kann durch entsprechenden Adapterelemente eine schnelle und in Bezug auf die relevanten Achsen genaue Anbringung des Gehäuses für jeden Anwendungsfall erfolgen.

Mittels einer externen mit einem Computer verbindbare Dateneinheit, die an den jeweiligen Steckverbinder und/oder an weitere Messelemente anschließbar oder angeschlossen sind, kann vorteilhafterweise eine Bereitstellung der Ist-Werte realisiert werden. Je nach dem werden die ermittelten Ist-Werte sowie die Soll-Werte und die Differenz auf einem Computer angezeigt und dann der Differenzwert per Hand in die Maschinensteuerung eingegeben oder auch direkt mittels einer entsprechenden Software gleich in der Maschinensteuerung berücksichtigt. Üblicherweise wird der tatsächlich eingegebene Wert aufgrund einer statistischen Auswertung ermittelt.

Bei einer weiteren vorteilhaften Ausführungsform der erfindungsgemäßen Teilungsmesseinrichtung kann das Gehäusefußteil einen kombinierten Datenausgang für den Drehgeber und den Neigungssensor aufweisen, der als Kombisteckverbinder ausgeführt ist. Dies vereinfacht die Weitergabe der Messdaten beispielsweise an eine Dateneinheit oder einen Computer.

Von dem am Gehäusefußteil angeordneten Kombisteckverbinder kann beispielsweise ein Leitungskabel zu dem Gehäusekopfteil führen. Dies hat jedoch den Nachteil, dass eine Verdrehung Gehäusekopfteils gegenüber dem Gehäusefußteil zu einer Verdrillung des Kabels führt. Damit ist die Anzahl der Umdrehungen des Gehäusekopfteils zu dem Gehäusefußteil beschränkt. Zur Aufhebung dieses Problems ist bei einer begünstigten Variante der Erfindung der Kombisteckverbinder über Schleifkontakte mit dem Gehäusekopfteil verbunden, so dass die Signale des Drehgebers und des an dem Gehäusekopfteil angeschlossenen ersten Neigungssensors über die Schleifkontakte abgegriffen werden. Damit wird eine beliebige Umdrehungsanzahl ermöglicht. Dabei sind die Schleifkontakte insbesondere mit den die Anschlussmittel bildenden Einzelsteckverbindern und/oder der elektronischen Schaltungseinheit über einen mehrbahnigen Schleifring elektrisch leitend verbunden.

Die vorgeschlagene erfindungsgemäße Teilungsmesseinrichtung kann wie vorstehend angegeben, auch ohne ein an dem Gehäusefußteil der Messvorrichtung oben angeordnetes Pendelelement mit integriertem Neigungssensor betrieben werden. Dazu kann an dem Einspannzapfen ein Abtastgestänge optional alternativ zu dem Pendelelement lösbar beispielweise über ein Klemmstück befestigt werden. Der Neigungssensor am Gehäusekopfteil wird für die Vermessung von horizontalen Rotationsachsen benötigt.

Als mögliche, wenngleich nicht zwingende Ergänzung der Erfindung kann neben der Messvorrichtung ein externer mit einem Computer verbindbarer A/D-Wandler vorgesehen sein, an den die Einzelsteckverbinder oder der Kombisteckverbinder der Messvorrichtung und/oder der zweite Neigungssensor über eine Steckverbindung anschließbar sind. Der A/D-Wandler dient dazu, die analogen Eingangssignale in digitale Signale zu wandeln. Er ist ausgangsseitig mit dem Computer verbunden, der die Daten übernimmt, zumindest zwischenspeichert und die eigentliche Auswertung der Messdaten sowie deren Visualisierung vornimmt. An den A/D-Wandler können der Drehgeber und der erste sowie der zweite Neigungssensoren auch direkt angeschlossen werden.

Gemäß dem erfindungsgemäßen Verfahren zur Überprüfung der Positioniergenauigkeit eines mindestens eine zweidimensionalen Bewegungsbahn ausführenden Maschinenteils, insbesondere der horizontalen Rotationsachse einer Maschine, beispielsweise einer NC-gesteuerten Werkzeugmaschine, mittels einer Teilungsmesseinrichtung, wobei das Gehäuse der Teilungsmesseinrichtung an dem die Bewegungsbahn ausführenden Maschinenteil mit horizontale Drehwelle angeordnet wird, ist vorgesehen, dass ein erster Neigungssensor an dem Gehäuse der Teilungsmesseinrichtung und ein zweiter Neigungssensor an einem Rahmenteil der Maschine angebracht und mittels den von den Neigungssensoren gelieferten Daten die von dem Drehgeber ermittelten Daten bei einer Lageänderung der Maschine korrigiert werden. Dies erfolgt vorzugsweise derart, das zu den von dem Drehgeber gelieferten Werte die von den Neigungssensoren gelieferten

Abweichungen gegenüber der Ursprungslage bei Beginn der Messung addiert bzw. subtrahiert werden. Die Addition oder Subtraktion richtet sich nach der Richtung der Abweichung von der senkrechten Lage. Damit kann auch der Reibwiderstand zwischen der Drehwelle und dem Drehgeber erfasst und berücksichtigt werden. Das Verfahren kann grundsätzlich mit einer vorstehend beschriebenen Teilungsmesseinrichtung, aber auch mit einer anderen geeigneten, entsprechende Neigungssensoren aufweisende Teilungsmesseinrichtung ausgeführt werden.

Gemäß einer weiteren Ausbildung des Verfahrens werden vor der Messung alle Messwerte des Drehgebers sowie der beiden Neigungssensoren in dem Computer auf 0 gesetzt. Verändert sich die Lage der ganzen Maschine, so ändern sich die Messwerte des Drehgebers und der beiden Neigungssensoren. Diese Veränderungen werden miteinander verrechnet, so dass das keinen Einfluss auf die Messung hat. Das gleiche geschieht bei einer Verwindung des Rahmens der Maschine. Vorzugsweise werden bei dem erfindungsgemäßen Verfahren die Daten außerhalb des Gehäuses der erfindungsgemäßen Teilungsmesseinrichtung korrigiert.

Die erfindungsgemäße Teilungsmesseinrichtung ist einfach aufgebaut, kompakt, präzise, rationell fertig- und anwendbar, und zudem preiswert. Sie ist in allen Lagen verwendbar und an in den Maschinen in jegliche Schräglage anbringbar. Sie ist unter anderem für die Vermessung von Rotationsachsen ohne eine zusätzlich Lasermesseinrichtung oder Libelle geeignet und in vielen Lagen einsetzbar, wo andere Messeinrichtungen an ihre Grenzen stoßen: Sie ermöglicht eine unbegrenzte Anzahl Umdrehungen mit einem kleinsten Messschritt von 0,0001° bzw. 0°00'01,1". Sie erlaubt neben den überwiegend auszuführenden Messungen ohne Pendel auch Messungen mit einem Pendelelement, wenn ungenaue Werte durch die Lageänderung der zu vermessenden Rotationsachse zu erwarten sind. Das Pendelelement kann einfach an dem Gehäuse der Teilungsmesseinrichtung befestigt werden und bewegt sich dann durch die entsprechend dem Gehäusetopfteil gegenüber der Drehachse. Das erfindungsgemäße Verfahren erlaubt die genauere Messung insbesondere bei Anlagen, bei denen mit einer Verlagerung des sich bewegenden Maschineteils durch das eigene Gewicht zu rechnen ist.

Nachfolgend wird die Erfindung anhand eines in den Zeichnungen dargestellten Ausführungsbeispiels näher erläutert. Weitere Merkmale der Erfindung ergeben sich aus der folgenden Beschreibung des Ausführungsbeispiels der Erfindung in Verbindung mit den Ansprüchen und den beigefügten Zeichnungen. Die einzelnen Merkmale der Erfindung können für sich allein oder zu mehreren bei unterschiedlichen Ausführungsformen der Erfindung verwirklicht werden. Es zeigen:
- Figur 1: eine perspektivische Ansicht der Teilungsmesseinrichtung mit einem Gehäuse mit einem Gehäusefußteil und einem Gehäusekopfteil;
- Figur 2: eine perspektivische Ansicht der inneren Elemente des Gehäusekopfteils;
- Figur 3: eine Schnittdarstellung der Teilungsmesseinrichtung gemäß Figur 1;
- Figur 5: die perspektivische Ansicht einer Teilungsmesseinrichtung mit einem Pendelelement;

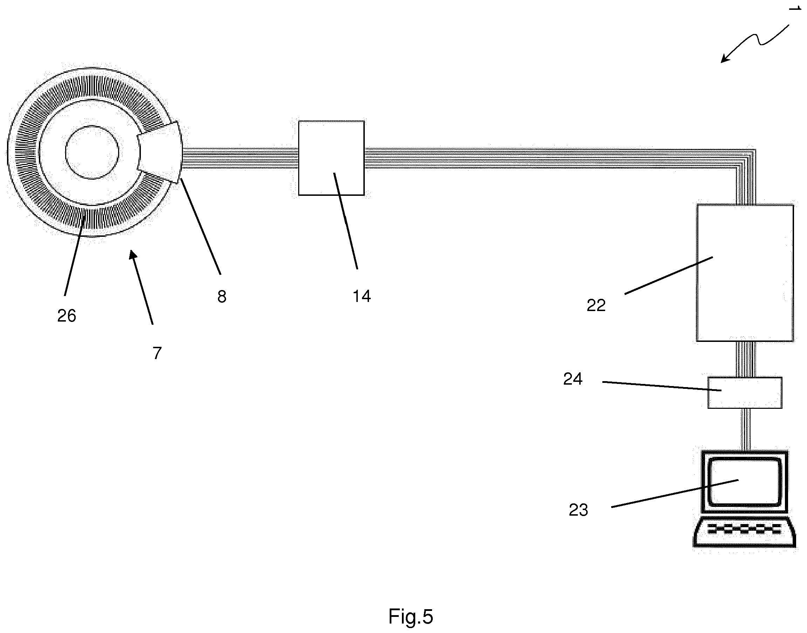

- Figur 5: die prinzipielle Schaltungsanordnung bei der Messung ohne ein Pendelelement; und

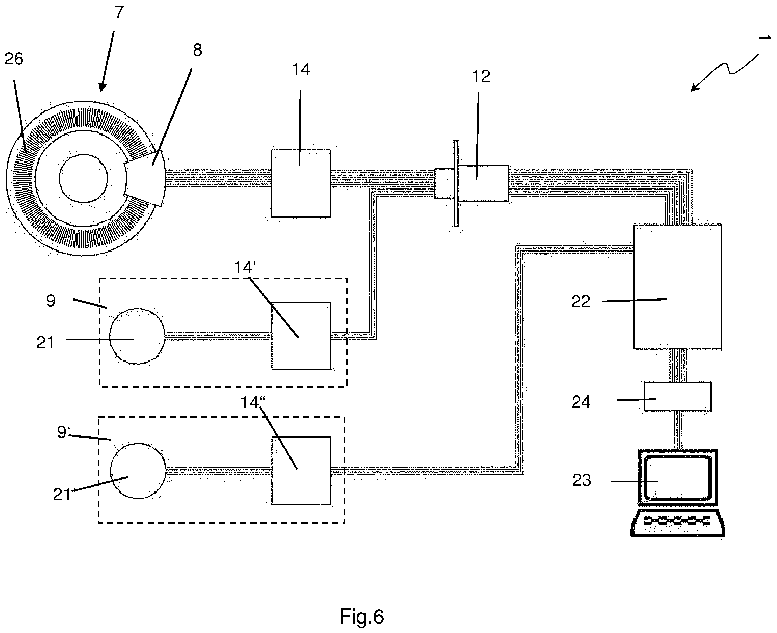

- Figur 6: die prinzipielle Schaltungsanordnung bei der Messung mit zwei Pendelelementen.

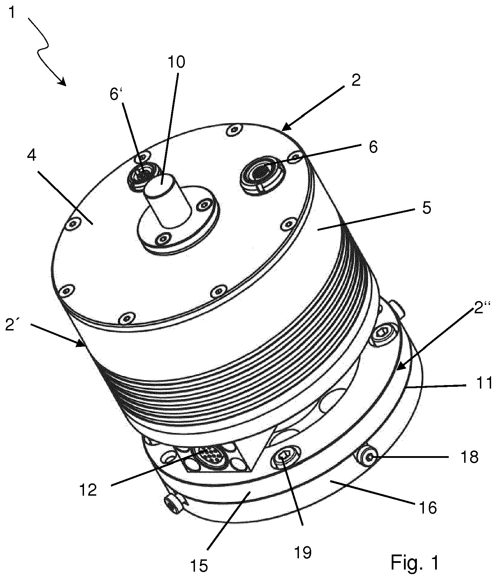

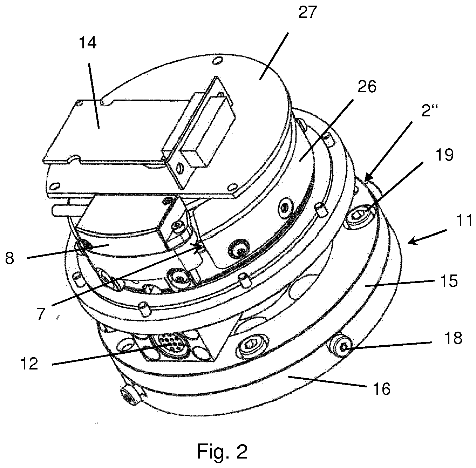

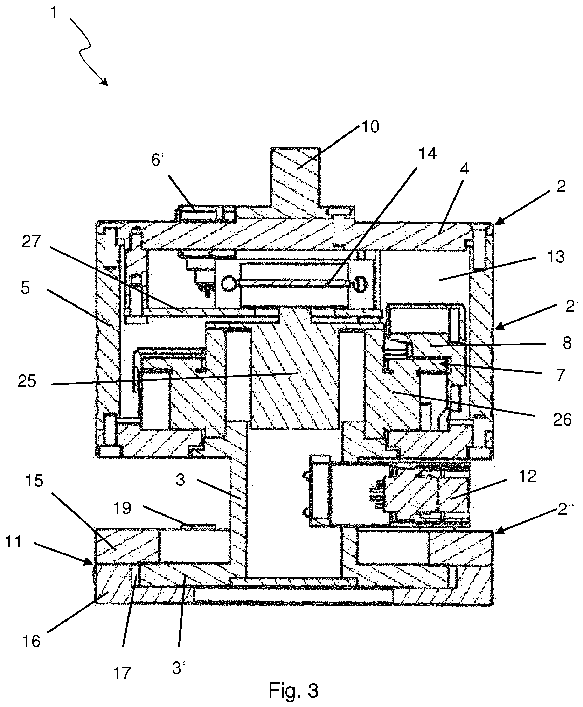

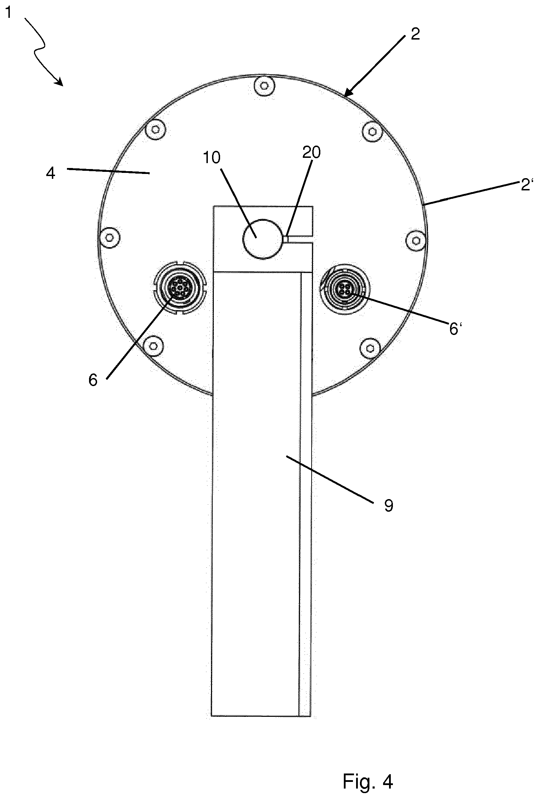

Figur 1 zeigt die Teilungsmesseinrichtung 1 mit einem zylindrischen Gehäuse 2, das ein Gehäusekopfteil 2' und ein Gehäusefußteil 2" aufweist. Das Gehäusekopfteil 2' und das Gehäusefußteil 2" sind über eine, hier nicht sichtbare, Drehwelle 3 (Figur 3) gegeneinander verdrehbar. Das Gehäusekopfteil 2' weist einen Gehäusedeckel 4 und einen Gehäusemantel 5 auf. In dem Gehäusedeckel 4 sind einzelne Anschlussbuchsen 6, 6' vorgesehen, die als Einzelsteckverbinder für den Anschluss von Verbindungskabeln für die jeweiligen Messzwecke vorgesehen sind. Bei diesem Ausführungsbeispiel dient die Anschlussbuchse 6 für den Datenausgang von einem in dem Gehäuseoberteil 2' angeordneten Drehgeber 7 (Figuren 2, 3) bei normalem Betrieb ohne weitere zusätzliche Sensoren. Die Anschlussbuchse 6' wird benötigt, wenn die Teilungsmesseinrichtung 1 zusätzlich mit einem Neigungssensor betrieben wird. In diesem Fall wird die Anschlussbuchse 6 nicht benötigt. Im Ausführungsbeispiel ist die Anschlussbuchse 6 8-polig und die Anschlussbuchse 6' 4-polig. Zentrisch und in Verlängerung der Drehwelle 3 und der dadurch gebildeten Drehachse befindet sich ein Einspannzapfen 10 an dem Gehäusedeckel 4. An dem Einspannzapfen 10 kann das für die Messung übliche und bekannte Abtastgestänge mittels eines Klemmstücks angebracht werden, das mit dem anderen Ende an einem feststehenden Maschinenteil bzw. einem Maschinenteil, gegenüber dem sich ein bewegliches Maschinenteil, an dem das Gehäuse 2 der Teilungsmesseinrichtung 1 befestigt ist, fixiert ist. Damit wird eine Drehbewegung des Gehäusekopfteils 2' verhindert, so dass die Messung durch die Drehung des Gehäusefußteils 2" gegenüber dem Gehäusekopfteil 2' erfolgen kann. Der Einspannzapfen 10 dient gleichzeitig noch der Anbringung eines Pendelelements 9 mit einem Neigungssensor 21 (Figur 4), das fest mit dem Einspannzapfen 10 verspannt wird.

Das Gehäusefußteil 2" weist einen Fuß 11 auf, der von dem Gehäusekopfteil 2' beabstandet ist. Das Gehäusefußteil 2" weist außerdem eine weitere Steckerbuchse 12 auf, die in Form eines Kombisteckverbinders als Datenausgang auch für die Signale vom Drehgeber 7 benutzt wird, wenn über die Anschlussbuchse 6' der Neigungssensor 21 angeschlossen ist. Die Steckerbuchse 12 ist als 12-polige Buchse ausgeführt. Die Signale vom Drehgeber 7 und der Anschlussbuchse 6' werden über einen Schleifringe 25 (Figur 3) von der Drehwelle 3 abgegriffen. An den Fuß 11 können in bekannter Art und Weise entsprechende Adapter für die Anbringung und sichere Fixierung des Gehäuses 2 an einem sich bewegenden und zu vermessenden Maschinenteil befestigt werden. Der Fuß 11 selbst weist auch noch Stellmittel mit von außen zugänglichen 90° versetzte Stellschrauben 18 zur Ausrichtung des Gehäusekopfteils 2' gegenüber dem Gehäusefußteil 2" auf. Hierzu weist der Fuß 11 eine Druckplatte 15 und eine Stellplatte 16 auf, die über Schrauben 19 mit Tellerfedern miteinander verbunden sind.

Figur 2 zeigt die Ausgestaltung im oberen Gehäusekopfteil 2'. Dort befindet sich der Drehgeber 7 mit einem Abtastkopf 8 und einem Lagerring 26 mit Kodierung und mit einem weitgehend spielfeien Kugellager und eine Wandlerplatine 14 auf einer am Gehäusedeckel 4 befestigbaren Trägerplatine 27 für den Drehgeber 7. Die Wandlerplatine 14 weist Anschlussmöglichkeiten für den Drehgeber 7 und die Anschlussbuchse 6, 6' auf und dient auch dazu, die analogen sinusförmigen Signale zu verstärken und aufzubereiten.

Die Schnittdarstellung in Figur 3 mit einer durch die Steckerbuchse 12 und den Abtastkopf 8 verlaufenden Schnittlinie zeigte den Gehäusemantel 5 mit dem Gehäusedeckel 4 des Gehäusekopfteils 2' mit den einzelnen Bauelementen im Inneren des Gehäusekopfteils 2'. Die zum Gehäusefußteil 2" gehörende und mit dem Fuß 11 fest verbundene und zum Drehgeber 7 gehörende Drehwelle 3 liegt mit dem Einspannzapfen 10 in einer Achse. Auf dieser Drehwelle 3 befindet sich der Lagerring 26 mit einer Kodierung mit 30 000 Strichen. Daraus ergibt sich eine Messgenauigkeit von ± 0,6 Winkelsekunden. Die exakte Winkelposition wird dann von dem Abtastkopf 8 mit der entsprechende Genauigkeit ermittelt. Mittels eines Schleifringes 25 werden die Signale zu der Steckbuchse 25 übertragen. Auf der Innenseite des Gehäusedeckels 4 befindet sich die Wandlerplatine 14 auf der die von dem Abtastkopf 8 bzw. der Anschlussbuchse 6' gelieferten Signale entsprechend entweder der Anschlussbuchse 6 oder der Steckerbuchse 12 über entsprechende hier nicht dargestellte Kabel zugeleitet werden.

Das Gehäusefußteil 2" enthält den Fuß 11 der mit der Drehwelle 3 verbunden ist. Der Fuß 11 besteht aus der oberen Druckplatte 15 und der unteren Stellplatte 16, wobei die Druckplatte 15 von der Stellplatte 16 mittels den Schrauben 19 lösbar ist, so dass die Drehwelle 3 mit dem Drehwellenfuß 3' in einem in der Stellplatte 16 befindlichen Hohlraum 17 in radialer Richtung über die Stellschrauben 18 ausgerichtet werden kann. Nach der Verstellung kann die Druckplatte 15 über Schrauben 19 mit Tellerfedern an der Stellplatte 16 fest angeschraubt werden, so dass die Drehachse der Drehwelle 3 festgelegt ist. Mit der radialen Verschiebung der Drehwelle 3 wird auch das Gehäusekopfteil 2' entsprechend ausgerichtet.

Mit der in den Figuren 1-3 dargestellten Teilungsmesseinrichtung 1 sind Messungen in allen räumlichen Lagen des sich bewegenden Maschinenteils möglich. In der Figur 4 ist die Teilungsmesseinrichtung 1 mit einem an dem Gehäusekopfteil 2' angebrachten Pendelelement 9 dargestellt. Bei dieser Anwendung der Teilungsmesseinrichtung 1 wird diese so an dem sich bewegenden Maschinenteil angebracht, dass die Drehwelle 3 bzw. die Drehachse horizontal ist. Nur dafür ist die Messung mit dem Pendelelement 9 möglich. Das Pendelelement 9 wird mit einer Spannöffnung 20 fest an dem Einspannzapfen 10 fixiert und dabei so angeordnet, dass es sich zwischen den beiden Anschlussbuchsen 6,6' befindet. Das Pendelelement 9 weist im Inneren einen hier nicht dargestellten Neigungssensor 21, der die Abweichungen aus der vertikalen Lage erfasst, sowie eine Wandlerplatine 14 auf. Der Neigungssensor 21 wird über ebenfalls hier nicht dargestellte Anschlusskabel mit der Anschlussbuchse 6' verbunden.

Figur 5 zeigt die für die Mehrzahl der Messungen ohne Pendelelement 9 wirkende Schaltungsanordnung. Die Messwerte werden vom Abtastkopf 8 über entsprechende 8-adrige Kabel zur Wandlerplatine 14 und über die Anschlussbuchse 6 und ein daran ein gestecktes Verbindungskabel zu einem A/D-Wandler 22 übertragen, in dem die analogen Signale digitalisiert werden. Die digitalen Signale werden anschließend über einen entsprechenden Anschlusswandler 24 (USB) zu einem Computer mit Eingabeeinheit 23 übertragen. Dort werden die Abweichungen vom Soll-Wert durch Addition bzw. Subtraktion ermittelt. Die Wandlerplatine 14 dient der Signalverstärkung und Signalaufbereitung für die vom Abtastkopf 8 gelieferten Signale.

Für die Durchführung der Messung unter Verwendung eines gestrichelt dargestellten Pendelelements 9 an dem Gehäuse 2, ist es erforderlich, ein entsprechend ausgestaltetes gestrichelt dargestelltes zweites Pendelelement mit einem weiteren Neigungssensor 21' an dem Maschinenrahmen der Maschine anzubringen. Figur 6 zeigt die dazugehörige entsprechende Schaltungsanordnung. Gemäß Figur 6 ist ein A/D-Wandler 22 vorgesehen, der die Eingangssignale digitalisiert. Die von dem Abtastkopf 8 gelieferten tatsächlichen Drehwinkel mit den von den Neigungssensoren 21 und 21' gelieferten Veränderungen gegenüber der Stellung bei Beginn der Messung werden durch Addition bzw. Subtraktion im Computer 23 korrigiert. Die ermittelten Korrekturwerte werden entweder per Hand über den Computer mit Eingabeterminal 23 oder direkt in die Maschinensteuerung eingegeben. Die vom Abtastkopf 8 aufgenommenen Signale gelangen wieder über ein 8-adriges Kabel zu der Wandlerplatine 14. Die Messwerte des Neigungssensors 21 des Pendelelement 9 gelangen zu einer Wandlerplatine 14' und über die Buchse 6' zu der Drehwelle 3 mit Schleifring und werden über die Steckbuchse 12 zu dem A/D-Wandler 22 übertragen. Mit dieser ist auch der Neigungssensor 21' in einem Pendelelement 9', das an dem Maschinenrahmen befestigt ist, über eine in dem Pendelelement 9' angeordnete Wandlerplatine 14" mit dem A/D-Wandler 22 verbunden. Die Verbindungkabel zu den Neigungssensoren 6, 6' sind 4-adrig. Die Wandlerplatine 14' und die Wandlerplatine 14" dienen wie auch die Wandlerplatine 14 der Signalverstärkung und Signalaufarbeitung der analogen Signale.

## Patentansprüche

1. Teilungsmesseinrichtung (1) zur Überprüfung der Positioniergenauigkeit eines mindestens eine zweidimensionalen Bewegungsbahn ausführenden Maschinenteils einer Maschine, mit einem Gehäuse (2) mit Befestigungsmittel (16) zum Festlegen an dem Maschinenteil und einer integrierten Messvorrichtung (7), die in dem Gehäuse (2) angeordnet ist und eine zentrisch angeordnete Drehwelle (3) und einen Drehgeber (8) zur Erfassung der Winkelposition des Drehgebers (8) gegenüber der Drehwelle (3) enthält, wobei das Gehäuse (2) ein Gehäusefußteil (2"), das die Befestigungsmittel (16) aufweist, und ein gegenüber dem Gehäusefußteil (2") drehbar über die zentrisch angeordnete und an dem Gehäusefußteil (2") drehfest angeordnete Drehwelle (3) verbundenes Gehäusekopfteil (2') aufweist, in dem der Drehgeber (8) angeordnet ist, **dadurch gekennzeichnet, dass** die Teilungsmesseinrichtung (1) einen ersten, an dem Gehäusekopfteil (2') anbringbaren Neigungssensor (21') aufweist, dass das Gehäusefußteil (2") einen kombinierten Datenausgang (12) für den Drehgeber (8) und den ersten Neigungssensor (21) aufweist, der als Kombisteckverbinder ausgeführt ist und/oder das Gehäusekopfteil (2") je einen Datenausgang (6) für den Drehgeber (8) und je einen Dateneingang (6') für den am Gehäusekopfteil (2') befindlichen Neigungssensor (21) aufweist, die als Einzelsteckverbinder ausgeführt sind, und dass die Teilungsmesseinrichtung (1) einen weiteren, direkt an dem Rahmenteil der Maschine anbringbaren zweiten Neigungssensor (21') aufweist.

2. Teilungsmesseinrichtung nach Anspruch 1, **dadurch gekennzeichnet, dass** das Gehäusekopfteil (2') einen mit der Achse der Drehwelle (3) fluchtend angeordneten Einspannzapfen (10) aufweist.

3. Teilungsmesseinrichtung nach Anspruch 1 oder 2, **dadurch gekennzeichnet, dass** das Gehäusekopfteil (2') einen Gehäusedeckel (4) und einen Gehäusemantel (5) aufweist.

4. Teilungsmesseinrichtung nach einem der vorangegangen Ansprüche, **dadurch gekennzeichnet, dass** das Gehäusekopfteil (2') elektrische Anschlussmittel (6, 6'), vorzugsweise Steckverbinder, für verschiedene Betriebsarten aufweist.

5. Teilungsmesseinrichtung nach einem der vorangegangen Ansprüche, **dadurch gekennzeichnet, dass** das Gehäusefußteil (2") einen Steckverbinder (12) aufweist, der über Schleifkontakte (25) mit dem Gehäusekopfteil (2) verbunden ist, wobei vorzugsweise die Schleifkontakte (25) mit den Steckverbindern (6, 6') und/oder einer elektronischen Schaltungseinheit elektrisch leitend verbunden sind.

6. Teilungsmesseinrichtung nach einem der vorstehenden Ansprüche, **dadurch gekennzeichnet, dass** das Gehäusefußteil (2") einen Fuß (11) mit einer Druckplatte (15) und mit einer Stellplatte (16) aufweist, wobei die Stellplatte (16) zur Befestigung an dem Maschinenteil vorgesehen ist und die Druckplatte (15) einen Drehwellenfuß (3') mit der Stellplatte (16) klemmt und zwischen der Stellplatte (16) und der Druckplatte (15) Ausrichtmittel (18) angeordnet sind.

7. Teilungsmesseinrichtung nach einem der vorstehenden Ansprüche, **gekennzeichnet durch** eine externe mit einem Computer (23) verbindbare Dateneinheit (22), die an den jeweiligen Steckverbinder und/oder an weitere Messelemente (21, 21') anschließbar oder angeschlossen sind.

8. Teilungsmesseinrichtung nach Anspruch 1, **dadurch gekennzeichnet, dass** ein erstes Pendelelement (9), das an dem Einspannzapfen (10) befestigbar oder abnehmbar befestigt ist, den ersten Neigungssensor (21), und ein zweites Pendelelement (9'), das direkt an einem Rahmenteil der Maschine anbringbar ist, den zweiten Neigungssensor (21') aufweist.

9. Verfahren zur Überprüfung der Positioniergenauigkeit eines mindestens eine zweidimensionalen Bewegungsbahn ausführenden Maschinenteils einer Maschine, insbesondere einer horizontalen Rotationsachse, mittels einer Teilungsmesseinrichtung (1) mit einem Gehäuse (2) mit Befestigungsmittel (16) zum Festlegen an dem Maschinenteil und einer integrierten Messvorrichtung (7), die in dem Gehäuse (2) eine zentrisch angeordnete Drehwelle (3) und ein Drehgeber (8) zur Erfassung der Winkelposition des Drehgebers (8) gegenüber der Drehwelle (3) enthält, wobei das Gehäuse (2) an dem die Bewegungsbahn ausführenden Maschinenteil mit horizontaler Drehwelle (3) angeordnet wird, **dadurch gekennzeichnet, dass** ein erster Neigungssensor (21) an dem Gehäuse (2, 2') und ein zweiter Neigungssensor (21') an einem Rahmenteil der Maschine angebracht und die bei einer Lageänderung der Maschine von den Neigungssensoren (21, 21') gelieferten Daten mit den von dem Drehgeber (8) ermittelten Daten verrechnet werden.

10. Verfahren nach Anspruch 9, **dadurch gekennzeichnet, dass** vor der Messung die von den beiden Neigungssensoren (21, 21') gelieferten Messwerte auf 0 gesetzt werden.

11. Verfahren nach Anspruch 9 oder 10, **dadurch gekennzeichnet, dass** zu den von dem Drehgeber (8) gelieferten Messwerte die von den Neigungssensoren (21, 21') gelieferten Abweichungen gegenüber der Ursprungslage bei Beginn der Messung addiert bzw. subtrahiert werden.

## Claims

1. A pitch measuring device (1) for checking a positioning precision of a machine element of a machine, the machine element moving along an at least two dimensional movement path, the pitch measuring device comprising a housing (2) including attachment devices (16) for attachment of the housing at the machine element and an integrated measuring device (7) that is arranged in the housing (2) and a centrally arranged rotation shaft (3) and a rotary encoder (8) for detecting an angular position of the rotary encoder (8) relative to the rotation shaft (3), whereby the housing (2) includes a housing base element (2") that comprises the attachment devices (16), and a housing top element (2') that is rotatably arranged relative to the housing base element (2") through the rotation shaft (3) that is centrally arranged and attached torque proof at the housing base element (2"), whereby the rotary encoder (8) is arranged in the housing top element (2'), **characterized in that**, the pitch measuring device (1) comprises a first inclination sensor (21) that is attachable at the housing top element (2'), that the housing base element (2") includes a combined data output (12) for the rotary encoder (8) and the first inclination sensor (21), whereby the combined data output (12) is configured as a combination plug connector and/or the housing top element (2') includes a respective data output (6) for the rotary encoder (8) and a respective data input (6') for the inclination sensor (21) arranged at the hosing top element (2'), and whereby the respective data outputs (6) and data inputs (6') are configured as individual plug connectors, and that the pitch measuring device (1) comprises a further, second inclination sensor (21') that is attachable directly at a frame element of the machine.

2. Pitch measuring device according to claim 1, **characterized in that** the housing top element (2') includes a clamping pin (10) that is arranged in alignment with an axis of the rotation shaft (3).

3. Pitch measuring device according to claim 1 or 2, **characterized in that** the housing top element (2') includes a housing cover (4) and a housing jacket (5).

4. Pitch measuring device according to one of the preceding claims, **characterized in that** the housing top element (2') includes electrical connection means (6, 6') which are preferably configured as plug connectors for different operating modes of the pitch measuring device.

5. Pitch measuring device according to one of the preceding claims, **characterized in that** the housing base element (2") includes a plug connector (12) which is connected to the housing top element (2') through slip contacts (25), whereby preferably the slip contacts (25) are connected to the plug connectors (6, 6') and/or to an electronic circuit unit in an electrically conductive manner.

6. Pitch measuring device according to one of the preceding claims, **characterized in that** the housing base element (2") includes a base (11) with a pressure plate (15) and an actuation plate (16), whereby the actuation plate (16) is provided for attachment at the machine element and the pressure plate (15) clamps a base of the rotation shaft (3') with the actuation plate (16) and orientation devices (18) are arranged between the actuation plate (16) and the pressure plate (15).

7. Pitch measuring device according to one of the preceding claims, **characterized by** an external data unit (22) that is connectable with a computer (23), whereby the external data unit (22) is connectable to or connected to a respective plug connector and/or additional measuring elements (21, 21').

8. Pitch measuring device according to claim 1, **characterized in that** a first pendulum element (9) which is removably attached or attachable at the clamping pin (10) includes the first inclination sensor (21), and that a second pendulum element (9') which is directly attachable at the frame element of the machine includes the second inclination sensor (21').

9. A method for a verification of a positioning precision of a machine element of a machine, the machine element moving along a movement path that is at least two-dimensional, in particular a horizontal axis of rotation, by means of a pitch measuring device (1) with a housing (2) with a fastening element (16) for attachment of the housing (2) at the machine element and an integrated measuring device (7) which includes in the housing (2) a centrally arranged rotation shaft (3) and a rotary encoder (8) for detecting an angular position of the of the rotary encoder (8) relative to the rotation shaft (3), whereby the housing (2) is arranged at the machine element performing the movement path with the horizontal rotation shaft (3), **characterized in that** a first inclination sensor (21) is attached at the housing (2, 2') and a second inclination sensor (21') is attached at a frame of the machine element and data provided by the inclination sensors (21, 21') during a position change of the machine is computed with data determined by the rotation encoder (8).

10. Method according to claim 9, **characterized in that** measurement values provided by the inclination sensors (21, 21') are zeroed before the measurement.

11. Method according to claim 9 or 10, **characterized in that** deviations from an original position at a beginning of a measurement provided by the inclination sensors (21, 21') are added or subtracted from measurement values provided by the rotary encoder (8).

## Revendications

1. Dispositif de mesure de pas (1) pour contrôler la précision de positionnement d'une partie de machine d'une machine qui effectue au moins une trajectoire de déplacement bidimensionnelle, comprenant un boîtier (2) avec des moyens de fixation (16) pour la fixation sur la partie de machine et un dispositif de mesure intégré (7) qui est disposé dans le boîtier (2) et qui contient un arbre rotatif (3) disposé centralement et un codeur rotatif (8) pour détecter la position angulaire du codeur rotatif (8) par rapport à l'arbre rotatif (3), le boîtier (2) présentant une partie pied de boîtier (2") qui présente les moyens de fixation (16) et une partie tête de boîtier (2') qui est reliée par l'arbre rotatif (3) disposé centralement et solidaire en rotation de la partie pied de boîtier (2") de façon à pouvoir tourner par rapport à la partie pied de boîtier (2"), dans laquelle est disposé le codeur rotatif (8), **caractérisé en ce que** le dispositif de mesure de pas (1) présente un premier capteur d'inclinaison (21) pouvant être monté sur la partie tête de boîtier (2'), que la partie pied de boîtier (2") présente une sortie de données combinée (12) pour le codeur rotatif (8) et le premier capteur d'inclinaison (21), qui est réalisée sous la forme d'un connecteur combiné et/ou la partie tête de boîtier (2') présente une sortie de données (6) pour le codeur rotatif (8) et une entrée de données (6') pour le capteur d'inclinaison (21) se trouvant sur la partie tête de boîtier (2'), qui sont réalisées sous la forme de connecteurs individuels, et que le dispositif de mesure de pas (1) présente un autre, deuxième capteur d'inclinaison (21') qui peut être monté directement sur une partie de châssis de la machine.

2. Dispositif de mesure de pas selon la revendication 1, **caractérisé en ce que** la partie tête de boîtier (2') présente un embout de serrage (10) disposé en alignement avec l'axe de l'arbre rotatif (3).

3. Dispositif de mesure de pas selon la revendication 1 ou 2, **caractérisé en ce que** la partie tête de boîtier (2') présente un couvercle de boîtier (4) et une enveloppe de boîtier (5).

4. Dispositif de mesure de pas selon l'une des revendications précédentes, **caractérisé en ce que** la partie tête de boîtier (2') présente des moyens de raccordement électrique (6, 6'), de préférence des connecteurs à fiches, pour différents modes de fonctionnement.

5. Dispositif de mesure de pas selon l'une des revendications précédentes, **caractérisé en ce que** la partie pied de boîtier (2") présente un connecteur à fiches (12) qui est relié à la partie tête du boîtier (2) par des contacts frotteurs (25), les contacts frotteurs (25) étant de préférence reliés électriquement aux connecteurs à fiches (6, 6') et/ou à une unité de circuit électronique.

6. Dispositif de mesure de pas selon l'une des revendications précédentes, **caractérisé en ce que** la partie pied de boîtier (2") présente un pied (11) avec une plaque de pression (15) et une plaque de réglage (16), la plaque de réglage (16) étant prévue pour la fixation sur la partie de machine et la plaque de pression (15) serrant un pied d'arbre rotatif (3') avec la plaque de réglage (16) et des moyens d'alignement (18) étant disposés entre la plaque de réglage (16) et la plaque de pression (15).

7. Dispositif de mesure de pas selon l'une des revendications précédentes, **caractérisé par** une unité de données externe (22) qui peut être reliée à un ordinateur (23) et qui peut être raccordée ou est raccordée au connecteur à fiches respectif et/ou à d'autres éléments de mesure (21, 21').

8. Dispositif de mesure de pas selon la revendication 1, **caractérisé en ce qu'**un premier élément pendulaire (9), qui peut être fixé ou est fixé de manière amovible à l'embout de serrage (10), présente le premier capteur d'inclinaison (21), et un deuxième élément pendulaire (9'), qui peut être fixé directement sur une partie de châssis de la machine, présente le deuxième capteur d'inclinaison (21').

9. Procédé pour contrôler la précision de positionnement d'une partie de machine d'une machine qui effectue au moins une trajectoire de déplacement bidimensionnelle, en particulier d'un axe de rotation horizontal, au moyen d'un dispositif de mesure de pas (1) comprenant un boîtier (2) avec des moyens de fixation (16) pour la fixation sur la partie de machine et un dispositif de mesure intégré (7) et qui contient dans le boîtier (2) un arbre rotatif (3) disposé centralement et un codeur rotatif (8) pour détecter la position angulaire du codeur rotatif (8) par rapport à l'arbre rotatif (3), le boîtier (2) étant disposé sur la partie de machine effectuant la trajectoire de déplacement avec un arbre rotatif horizontal (3), **caractérisé en ce qu'**un premier capteur d'inclinaison (21) est monté sur le boîtier (2, 2') et un deuxième capteur d'inclinaison (21') est monté sur une partie de châssis de la machine et les données fournies par les capteurs d'inclinaison (21, 21') en cas de changement de position de la machine sont compensées par les données déterminées par le codeur rotatif (8).

10. Procédé selon la revendication 9, **caractérisé en ce que** les valeurs de mesure fournies par les deux capteurs d'inclinaison (21, 21') sont mises à 0 avant la mesure.

11. Procédé selon la revendication 9 ou 10, **caractérisé en ce que** les écarts par rapport à la position initiale fournis par les capteurs d'inclinaison (21, 21') sont additionnés aux valeurs de mesure fournies par le codeur rotatif (8) ou soustraits de celles-ci au début de la mesure.
